# EUROPEAN PATENT APPLICATION

(11) **EP 4 675 254 A1**
(43) Date of publication of application: **07.01.2026**
(21) Application number: 25185371.9
(22) Date of filing: 26.06.2025
(51) Int. Cl.: G01N 15/01, G01N 15/075, G01N 15/1429, G01N 15/1434, G01N 15/14

(54) **DETERMINATION OF THE CELL CONCENTRATION OF A FLUID FOR FACILITIES USING DIFFERENTLY CONFIGURED CELL COUNTERS**

(30) Priority: 01.07.2024 US 202463666370 P
(71) Applicant: Fenwal, Inc., Lake Zurich, IL 60047 (US)
(72) Inventor: KUSTERS, Benjamin E., Lake Zurich, 60047 (US); MIN, Kyungyoon, Lake Zurich, 60047 (US)
(74) Representative: Maikowski & Ninnemann Patentanwälte Partnerschaft mbB

(57) **Abstract**

A method of determining a cell concentration of a subject fluid includes first determining an unadjusted cell concentration of each of a plurality of fluids based on an intensity of light emitted through the fluid and a correlation curve derived using a first cell counter. A measured cell concentration obtained for each fluid from a second cell counter is then plotted against the unadjusted cell concentration to create a curve represented by an equation that is selected to be used as an adjustment equation. Light is then emitted through the subject fluid, with at least a portion of the light exiting the subject fluid being received. An unadjusted cell concentration of the subject fluid is determined based on the correlation curve and the intensity of the received light. The adjustment equation is then applied to the unadjusted concentration to determine an adjusted cell concentration of the subject fluid.

## Description

### Background

### Field of the Disclosure

The present disclosure relates to optical monitoring of fluids. More particularly, the present disclosure relates to determination of the concentration of cells in a fluid for facilities using differently configured cell counters.

### Description of Related Art

It is known to employ an optical detection assembly to monitor the flow of fluids (including biological fluids, such as blood) through a fluid flow circuit to determine various characteristics of the flow. A typical optical detection assembly includes a light source (e.g., a laser or a light-emitting diode) configured to emit light into a fluid-containing vessel of the fluid flow circuit, with a light detector (e.g., a photodiode) configured to receive light exiting the vessel. The light detector transmits a signal to a controller based upon the light it has received, with the controller using the signal to determine one or more properties of the fluid.

A conventional optical detection assembly may have any of a number of possible shortcomings, depending on its exact configuration. For example, it is common for an optical detection assembly to monitor flow of a fluid through flexible plastic tubing of a fluid flow circuit. When light is incident upon plastic tubing, the transport of light into the tubing lumen may vary according to Snell's Law depending on the refractive indices of the materials and incident light angles formed by the tubing surface. The refractive index of air (which is approximately 1) and the refractive index of plastic (which may typically be approximately 1.3 to 1.5) are quite different, and when combined with inconsistent formation of the tubing surface from procedure to procedure and, thus, varying incident angles, light transport into the tubing will vary among procedures, leading to inconsistent measurements of fluid properties.

Another possible shortcoming is the configuration of the light detector of a conventional optical detection assembly, which is frequently a single photodiode. By such a configuration, only the amplitude of light exiting the vessel at a single location is known, whereas light transmitted through turbid media (e.g., blood or a blood component) will be dispersed, rather than exiting along a single path that can be fully received by a single photodiode.

U.S. Patent Application Publication No. 2023/0243746 (the disclosure of which is hereby incorporated herein by reference) describes an optical detection assembly that improves upon such conventional optical detection assemblies. The optical detection assembly described in U.S. Patent Application Publication No. 2023/0243746 is based upon the principle that light exiting a turbid media (such as blood or a blood component) will be dispersed, such that the light may be detected at multiple positions using a light detector array, rather than at a single location by a single light detector (e.g., an individual photodiode). Different fluids (e.g., ones having different concentrations of a target substance) result in emerging light beams having different dispersion patterns, with individual light detectors or light-sensing elements of a light detector array receiving various amounts of light that has been transmitted through the fluid. Based on the maximum intensity of light received by one or more of the individual light detectors, the controller may determine the concentration of a substance (e.g., platelets) in the subject fluid.

When the concentration of a cell or cells in a fluid is to be determined, the controller may use an empirically derived correlation curve to correlate one or more signals from the light detector array to a corresponding cell concentration. For example, U.S. Patent Application Publication No. 2025/0147003 (the disclosure of which is hereby incorporated herein by reference) describes a correlation curve that correlates the slope of a portion of a light transmission intensity profile to the concentration of platelets in a subject fluid. The curve is derived using a cell counter that serves as a cell measurement benchmark, with cell concentration measurements from the cell counter being obtained and plotted against corresponding signals from an optical detection assembly monitoring the same fluid. One possible limitation of this approach is the variability of the results that may be reported for a subject fluid by differently configured cell counters. In particular, it has been found that differently configured cell counters (which may include cell counters provided by different manufacturers and different models of cell counters provided by the same manufacturer) may report different cell concentration measurements for a subject fluid, such that an empirically derived correlation curve may only be applicable when used in combination with a cell counter having the same configuration as the one used to create the correlation curve.

### Summary

There are several aspects of the present subject matter which may be embodied separately or together in the devices and methods described and claimed below. These aspects may be employed alone or in combination with other aspects of the subject matter described herein, and the description of these aspects together is not intended to preclude the use of these aspects separately or the claiming of such aspects separately as set forth in the claims appended hereto.

In one aspect, an optical detection assembly includes a light source, a light detector, and a controller. The light source is configured and oriented to emit a light into a fluid in a vessel, while the light detector is configured to receive at least a portion of the light exiting the vessel and to generate signals indicative of an intensity of the received light. The controller is configured to receive the signals from the light detector and programmed with a correlation curve derived using a first cell counter and relating the signals from the light detector to a concentration of cells in the fluid in the vessel. The controller is further programmed to receive or calculate an adjustment equation reflecting a comparison between a configuration of the first cell counter and a configuration of a second cell counter used in combination with the optical detection assembly, to receive the signals from the light detector, and to determine an unadjusted concentration of cells in the fluid in the vessel based at least in part on the signals and the correlation curve. The controller then applies the adjustment equation to the unadjusted concentration of cells in the fluid in the vessel to determine an adjusted concentration of cells in the fluid in the vessel.

In another aspect, a fluid processing device includes a pump system, a valve system, an optical detection assembly, and a controller. The optical detection assembly includes a light source configured and oriented to emit a light into a fluid in a vessel and a light detector configured to receive at least a portion of the light exiting the vessel and to generate signals indicative of an intensity of the received light. The controller is configured to receive the signals from the light detector, programmed with a correlation curve derived using a first cell counter and relating the signals from the light detector to a concentration of cells in the fluid in the vessel, and programmed to control the operation of the pump system and the valve system to execute a fluid processing procedure. The controller is further programmed to receive or calculate an adjustment equation reflecting a comparison between a configuration of the first cell counter and a configuration of a second cell counter used in combination with the fluid processing device, to receive the signals from the light detector, and to determine an unadjusted concentration of cells in the fluid in the vessel based at least in part on the signals and the correlation curve. The controller then applies the adjustment equation to the unadjusted concentration of cells in the fluid in the vessel to determine an adjusted concentration of cells in the fluid in the vessel.

In yet another aspect, a method is provided for determining a concentration of cells in a subject fluid in a vessel. The method includes providing a plurality of fluids having different concentrations of cells and, for each one of the fluids, emitting a light through the fluid, receiving at least a portion of the light exiting the fluid vessel, and determining an unadjusted concentration of cells in the fluid based at least on part on an intensity of the light exiting the fluid and a correlation curve derived using a first cell counter. A measured cell concentration is obtained from a second cell counter for each fluid, with the unadjusted concentration of cells in the fluid being plotted against the measured cell concentration of the fluid as a data point so as to create a curve having a plurality of data points. An adjustment equation is then determined to be an equation representing the curve. Light is then emitted through the subject fluid in the vessel, with at least a portion of the light being received and with an unadjusted concentration of cells in the subject fluid in the vessel being determined based at least in part on the correlation curve and the intensity of the light exiting the subject fluid and the vessel. The adjustment equation is applied to the unadjusted concentration of cells in the subject fluid in the vessel to determine an adjusted concentration of cells in the subject fluid in the vessel.

### Brief Description of the Drawings

Fig. 1 is a perspective view of an exemplary hardware component of a fluid processing system according to an aspect of the present disclosure;
Fig. 2 is a schematic view of an exemplary disposable component that may be mounted to the hardware component of Fig. 1 to complete a fluid processing system according to an aspect of the present disclosure;
Fig. 3 is a perspective view of an exemplary optical detection assembly of the hardware component of Fig. 1, with a lid thereof in an open position;
Fig. 4 is a perspective view of the optical detection assembly of Fig. 3, with the lid in a closed position;
Fig. 5 is a perspective view of selected components of the optical detection assembly of Fig. 3;
Fig. 6 is a diagrammatic view of the optical detection assembly of Fig. 3, monitoring a fluid having a low cellular concentration;
Fig. 7 is a diagrammatic view of the optical detection assembly of Fig. 3, monitoring a fluid having a high cellular concentration;
Fig. 8 is a chart illustrating a scattering profile generated using signals from a light detector array of the optical detection assembly of Fig. 3;
Fig. 9 is a chart illustrating a portion of a scattering profile generated using signals from the light detector array of the optical detection assembly of Fig. 3;
Fig. 10 is a chart illustrating an exemplary correlation between the slope of a portion of a scattering profile and the concentration of platelets in a fluid;
Fig. 11 is a chart illustrating the relationship between the platelet concentration of a fluid as predicted by an optical detection assembly and as measured by a cell counter of the type used to generate the chart of Fig. 10; and
Fig. 12 is a chart illustrating the relationships between the platelet concentration of a fluid as predicted by an optical detection assembly and as measured by differently configured cell counters.

### Description of the Illustrated Embodiments

The embodiments disclosed herein are for the purpose of providing an exemplary description of the present subject matter. They are, however, only exemplary, and the present subject matter may be embodied in various forms. Therefore, specific details disclosed herein are not to be interpreted as limiting the subject matter as defined in the accompanying claims.

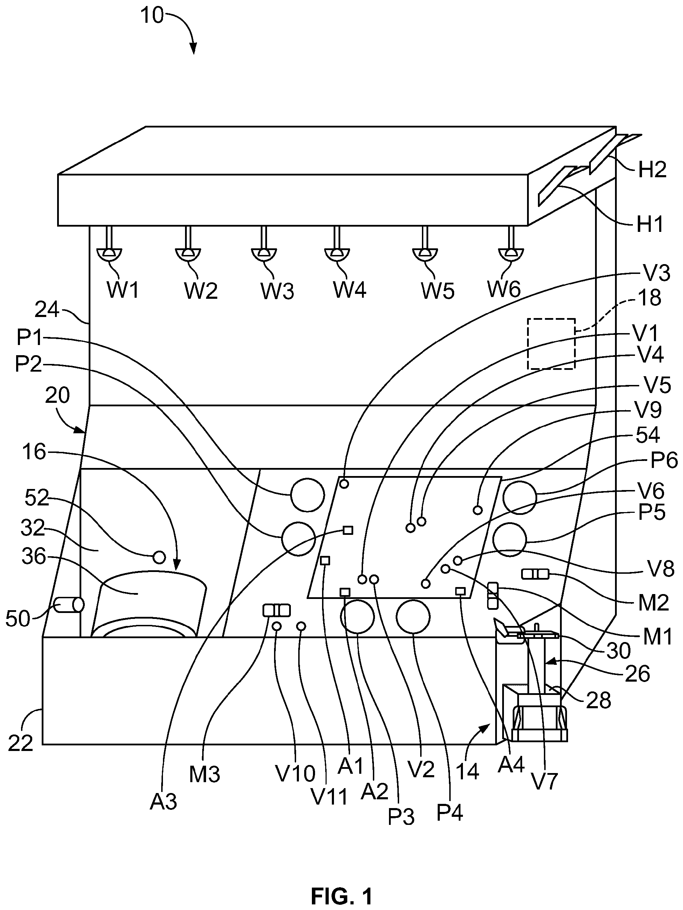

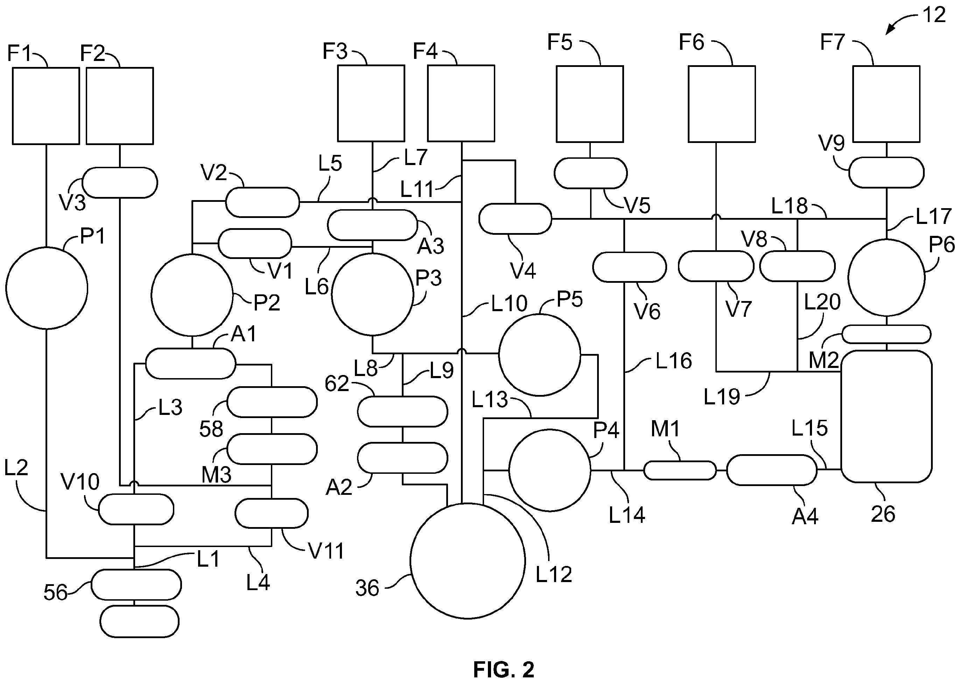

Figs. 1 and 2 show components of a fluid processing system that embodies various aspects of the present subject matter. Use of the system for separating a biological fluid (namely, blood) into two or more components and collecting at least one of the components will be described herein, though it should be understood that systems according to the present disclosure can be used for processing a variety of different fluids.

Generally speaking, the system includes two principal components, a durable and reusable fluid processing device 10 (Fig. 1) and a disposable fluid flow circuit 12 (Fig. 2). The illustrated fluid processing device 10 includes a spinning membrane separator drive unit 14, a centrifuge or centrifugal separator 16, additional components that control fluid flow through the disposable fluid flow circuit 12, and a controller 18, which governs the operation of the other components of the fluid processing device 10 to perform a fluid processing procedure. While the principles described herein may be employed when using the fluid processing device 10 of Fig. 1, it should be understood that these same principles may be applied to other fluid processing devices, including devices employing single separation technologies or approaches.

### I. The Durable Fluid Processing Device

The fluid processing device 10 (Fig. 1) is configured as a durable item that is capable of long-term use. It should be understood that the fluid processing device 10 of Fig. 1 is merely exemplary of one possible configuration and that fluid processing devices according to the present disclosure may be differently configured.

In the illustrated embodiment, the fluid processing device 10 is embodied in a single housing or case 20. The illustrated case 20 includes a generally horizontal portion 22 (which may include an inclined or angled face or upper surface for enhanced visibility and ergonomics) and a generally vertical portion 24. The spinning membrane separator drive unit 14 and the centrifugal separator 16 are shown as being incorporated into the generally horizontal portion 22 of the case 20, while the controller 18 is shown as being incorporated into the generally vertical portion 24.

### A. Spinning Membrane Separator Drive Unit

The fluid processing device 10 includes a spinner support or spinning membrane separator drive unit 14 for accommodating a generally cylindrical spinning membrane separator 26 of the fluid flow circuit 12. U.S. Patent No. 5,194,145 (which is hereby incorporated herein by reference) describes an exemplary spinning membrane separator drive unit that would be suitable for incorporation into the fluid processing device 10, but it should be understood that the spinning membrane separator drive unit 14 may be differently configured without departing from the scope of the present disclosure.

The illustrated spinning membrane separator drive unit 14 has a base 28 configured to receive a lower portion of the spinning membrane separator 26 and an upper end cap 30 to receive an upper portion of the spinning membrane separator 26. Preferably, the upper end cap 30 is positioned directly above the base 28 to orient a spinning membrane separator 26 received by the spinning membrane separator drive unit 14 vertically and to define a vertical axis about which the spinning membrane separator 26 is spun. While it may be advantageous for the spinning membrane separator drive unit 14 to vertically orient a spinning membrane separator 26, it is also within the scope of the present disclosure for the spinning membrane separator 26 to be differently oriented when mounted to the fluid processing device 10.

In one embodiment, one of the base 28 and upper end cap 30 of the spinning membrane separator drive unit 14 is movable with respect to the other, which may allow differently sized spinning membrane separators 26 to be received by the spinning membrane separator drive unit 14. For example, the upper end cap 30 may be translated vertically with respect to the base 28 and locked in a plurality of different positions, with each locking position corresponding to a differently sized spinning membrane separator 26.

At least one of the base 28 and the upper end cap 30 is configured to spin one or more components of the spinning membrane separator 26 about the axis defined by the spinning membrane separator drive unit 14. The mechanism by which the spinning membrane separator drive unit 14 spins one or more components of the spinning membrane separator 26 may vary without departing from the scope of the present disclosure. In one embodiment, a component of the spinning membrane separator 26 to be spun includes at least one element configured to be acted upon by a magnet (e.g., a metallic material), while the spinning membrane separator drive unit 14 includes a magnet (e.g., a series of magnetic coils or semicircular arcs). By modulating the magnetic field acting upon the aforementioned element of the spinning membrane separator 26, the component or components of the spinning membrane separator 26 may be made to spin in different directions and at varying speeds. In other embodiments, different mechanisms may be employed to spin the component or components of the spinning membrane separator 26.

Regardless of the mechanism by which the spinning membrane separator drive unit 14 spins the component or components of the spinning membrane separator 26, the component or components of the spinning membrane separator 26 is/are preferably spun at a speed that is sufficient to create Taylor vortices in a gap between the spinning component and a stationary component of the spinning membrane separator 26 (or a component that spins at a different speed). Fluid to be separated within the spinning membrane separator 26 flows through this gap, and filtration may be dramatically improved by the creation of Taylor vortices.

### B. Centrifugal Separator

As for the centrifugal separator 16, it includes a centrifuge compartment 32 that receives a centrifugal separation chamber 36 of the fluid flow circuit 12, as well as other components of the centrifugal separator 16. Further details as to the centrifugal separator are set forth in PCT Patent Application Publication No. WO 2018/053217 A1, which is hereby incorporated herein by reference.

Fluid (e.g., anticoagulated whole blood) is introduced into the centrifugal separation chamber 36 by an umbilicus, with the fluid being separated into a layer of less dense components (e.g., platelet-rich plasma, in the case of blood being separated) and a layer of more dense components (e.g., packed red blood cells) within the centrifugal separation chamber 36 as a result of centrifugal forces as it rotates. Components of an interface monitoring system may be positioned within the centrifuge compartment 32 to oversee separation of fluid within the centrifugal separation chamber 36. The interface monitoring system may include a light source 50 and a light detector 52, which is positioned and oriented to receive at least a portion of the light emitted by the light source 50.

The orientation of the various components of the interface monitoring system depends at least in part on the particular configuration of the centrifugal separation chamber 36. In general, though, the light source 50 emits a light beam (e.g., a laser light beam) through the separated fluid components within the centrifugal separation chamber 36 (which may be formed of a material that substantially transmits the light or at least a particular wavelength of the light without absorbing it). A portion of the light reaches the light detector 52, which transmits a signal to the controller 18 that is indicative of the location of an interface between the separated fluid components. If the controller 18 determines that the interface is in the wrong location (which can affect the separation efficiency of the centrifugal separator 16 and/or the quality of the separated fluid components), then it can issue commands to the appropriate components of the fluid processing device 10 to modify their operation so as to move the interface to the proper location.

### C. Other Components Of The Fluid Processing Device

In addition to the spinning membrane separator drive unit 14 and the centrifugal separator 16, the fluid processing device 10 may include other components compactly arranged to aid fluid processing.

The generally horizontal portion 22 of the case 20 of the illustrated fluid processing device 10 includes a cassette station 54, which accommodates a flow control cassette of the fluid flow circuit 12. In one embodiment, the cassette station 54 is similarly configured to the cassette station of U.S. Patent No. 5,868,696 (which is hereby incorporated herein by reference), but is adapted to include additional components and functionality. The illustrated cassette station 54 includes a plurality of clamps or valves V1-V9 (which are collectively referred to herein as the "valve system" of the fluid processing system 10), which move between a plurality of positions (e.g., between a retracted or lowered position and an actuated or raised position) to selectively contact or otherwise interact with corresponding valve stations of the flow control cassette of the fluid flow circuit 12. Depending on the configuration of the fluid flow circuit 12, its cassette may not include a valve station for each valve V1-V9 of the cassette station 54, in which case fewer than all of the valves V1-V9 will be used in a fluid processing procedure.

In the actuated position, a valve V1-V9 engages the associated valve station to prevent fluid flow through that valve station (e.g., by closing one or more ports associated with the valve station, thereby preventing fluid flow through that port or ports). In the retracted position, a valve V1-V9 is disengaged from the associated valve station (or less forcefully contacts the associated valve station than when in the actuated position) to allow fluid flow through that valve station (e.g., by opening one or more ports associated with the valve station, thereby allowing fluid flow through that port or ports). Additional clamps or valves V10 and V11 of the valve system may be positioned outside of the cassette station 54 to interact with portions of valve stations (which may be lengths of tubing) of the fluid flow circuit 12 to selectively allow and prevent fluid flow therethrough. The valves V1-V9 and corresponding valve stations of the cassette station 54 and cassette may be differently configured and operate differently from the valves V10 and V11 and the valve stations that are spaced away from the cassette station 54.

The cassette station 54 may be provided with additional components, such as pressure sensors A1-A4, which interact with sensor stations of the cassette to monitor the pressure at various locations of the fluid flow circuit 12. For example, if the fluid source is a human donor, one or more of the pressure sensors A1-A4 may be configured to monitor the pressure of the donor's vein during blood draw and return. Other pressure sensors A1-A4 may monitor the pressure of the spinning membrane separator 26 and the centrifugal separation chamber 36. The controller 18 may receive signals from the pressure sensors A1-A4 that are indicative of the pressure within the fluid flow circuit 12 and, if a signal indicates a low- or highpressure condition, the controller 18 may initiate an alarm or error condition to alert an operator to the condition and/or to attempt to bring the pressure to an acceptable level without operator intervention.

The fluid processing device 10 may also include a plurality of pumps P1-P6 (which are collectively referred to herein as the "pump system" of the fluid processing device 10) to cause fluid to flow through the fluid flow circuit 12. The pumps P1-P6 may be differently or similarly configured and/or function similarly or differently from each other. In the illustrated embodiment, the pumps P1-P6 are configured as peristaltic pumps, which may be generally configured as described in U.S. Patent No. 5,868,696. Each pump P1-P6 engages a different tubing loop extending from a side surface of the flow control cassette and may be selectively operated under command of the controller 18 to cause fluid to flow through a portion of the fluid flow circuit 12. In one embodiment, all or a portion of the cassette station 54 may be capable of translational motion in and out of the case 20 to allow for automatic loading of the tubing loops into the associated pump P1-P6. In another exemplary embodiment, rather than employing peristaltic pumps, pneumatic pumps may be employed, with actuators incorporated into the cassette station 54 interacting with suitably configured portions of the fluid flow circuit 12 (e.g., pump stations of a cassette mounted to the cassette station 54) to convey fluid through the fluid flow circuit 12.

The illustrated fluid processing device 10 also includes a spinner inlet sensor M1 for determining one or more properties of a fluid flowing into a spinning membrane separator 26 mounted within the spinning membrane separator drive unit 14. If the fluid flowing into the spinning membrane separator 26 is whole blood (which may include anticoagulated whole blood), the spinner inlet sensor M1 may be configured to determine the hematocrit of the blood flowing into the spinning membrane separator 26. If the fluid flowing into the spinning membrane separator 26 is platelet-rich plasma, the spinner inlet sensor M1 may be configured to determine the platelet concentration of platelet-rich plasma flowing into the spinning membrane separator 26. The spinner inlet sensor M1 may detect the one or more properties of a fluid by optically monitoring the fluid as it flows through tubing of the fluid flow circuit 12, or by any other suitable approach. The controller 18 may receive signals from the spinner inlet sensor M1 that are indicative of the one or more properties of fluid flowing into the spinning membrane separator 26 and use the signals to optimize the fluid processing procedure based upon that property or properties. If the property or properties is/are outside of an acceptable range, then the controller 18 may initiate an alarm or error condition to alert an operator to the condition. A suitable device and method for monitoring hematocrit and/or platelet concentration is described in U.S. Patent No. 6,419,822 (which is hereby incorporated herein by reference), but it should be understood that a different approach may also be employed for monitoring one or more properties of a fluid or fluid component flowing into the spinning membrane separator 26.

The illustrated fluid processing device 10 further includes a spinner outlet sensor M2, which accommodates tubing of the fluid flow circuit 12 that flows a separated fluid component out of the spinning membrane separator 26. The spinner outlet sensor M2 monitors the separated fluid component to determine one or more properties thereof, and may do so by optically monitoring the separated fluid component as it flows through the tubing or by any other suitable approach. In one embodiment, separated plasma flows through the tubing, in which case the spinner outlet sensor M2 may be configured to determine the amount of cellular blood components in the plasma and/or whether the plasma is hemolytic and/or lipemic. This may be done using an optical monitor of the type described in U.S. Patent No. 8,556,793 (which is hereby incorporated herein by reference) that measures the optical density of the fluid in the associated tubing, or by any other suitable device and/or method.

The illustrated fluid processing device also includes an air detector M3 (e.g., an ultrasonic bubble detector), which accommodates tubing of the fluid flow circuit 12 that flows fluid to a recipient. It may be advantageous to prevent air from reaching the recipient, whether a human recipient (e.g., the same human that serves as the blood source) or a non-human recipient (e.g., a storage bag or container), so the air detector M3 may transmit signals to the controller 18 that are indicative of the presence or absence of air in the tubing. If the signal is indicative of air being present in the tubing, the controller 18 may initiate an alarm or error condition to alert an operator to the condition and/or to take corrective action to prevent the air from reaching the recipient (e.g., by reversing the flow of fluid through the tubing or diverting flow to a vent location).

The generally vertical portion 24 of the case 20 may include a plurality of volume measurement systems W1-W6 (six are shown, but more or fewer may be provided), each configured to be associated with one or more fluid containers F1-F7 of the fluid flow circuit 12 (Fig. 2). Each volume measurement system W1-W6 is configured to work in combination with the controller 18 to measure a current volume of fluid within an associated fluid container F1-F7 and to calculate a change in that volume between two or more points in time. The individual volume measurement systems W1-W6 may be variously configured without departing from the scope of the present disclosure, which may include two or more of the volume measurement systems W1-W6 being differently configured. In one exemplary embodiment, a volume measurement system W1-W6 may be configured as or include a weight scale configured to support and measure the weight of a fluid within an associated fluid container F1-F7 (with the measured weight being converted to a volume by a component of the volume measurement system W1-W6 or by the controller 18). In another exemplary embodiment, a volume measurement system W1-W6 may include one or more sensors configured to detect a volume and/or a change in volume of a fluid within an associated fluid container F1-F7. Volume measurement systems including additional components (e.g., both a weight scale and a sensor) and/or alternative components may also be employed without departing from the scope of the present disclosure.

Regardless of its particular configuration, each volume measurement system W1-W6 transmits to the controller 18 a signal that is indicative of the volume of the fluid within the associated container F1-F7 to track the change of volume during the course of a procedure. This allows the controller 18 to process the incremental volume changes to derive fluid processing volumes and flow rates and subsequently generate signals to control processing events based, at least in part, upon the derived processing volumes. For example, the controller 18 may diagnose leaks and obstructions in the fluid flow circuit 12 and alert an operator.

The illustrated case 20 is also provided with a plurality of hooks or supports H1 and H2 that may support various components of the fluid flow circuit 12 or other suitably sized and configured objects.

### D. Controller

According to an aspect of the present disclosure, the fluid processing device 10 includes a controller 18, which is suitably configured and/or programmed to control operation of the fluid processing device 10. In one embodiment, the controller 18 comprises a main processing unit (MPU), which can comprise, e.g., a Pentium^{™} type microprocessor made by Intel Corporation, although other types of conventional microprocessors can be used. In one embodiment, the controller 18 may be mounted inside the generally vertical portion 24 of the case 20, adjacent to or incorporated into an operator interface station (e.g., a touchscreen). In other embodiments, the controller 18 and operator interface station may be associated with the generally horizontal portion 22 or may be incorporated into a separate device that is connected (either physically, by a cable or the like, or wirelessly) to the fluid processing device 10.

The controller 18 is configured and/or programmed to execute at least one fluid processing procedure but, more advantageously, is configured and/or programmed to execute a variety of different fluid processing procedures. For example, the controller 18 may be configured and/or programmed to carry out one or more of the following: a double unit red blood cell collection procedure, a plasma collection procedure, a plasma/red blood cell collection procedure, a red blood cell/platelet/plasma collection procedure, a platelet collection procedure, and a platelet/plasma collection procedure.

More particularly, in carrying out these fluid processing procedures, the controller 18 is configured and/or programmed to control one or more of the following tasks: drawing fluid into a fluid flow circuit 12 mounted to the fluid processing device 10, conveying fluid through the fluid flow circuit 12 to a location for separation (i.e., into a spinning membrane separator 26 or centrifugal separation chamber 36 of the fluid flow circuit 12), separating the fluid into two or more components as desired, and conveying the separated components into storage containers, to a second location for further separation (e.g., into whichever of the spinning membrane separator 26 and centrifugal separation chamber 36 that was not used in the initial separation stage), or to a recipient (which may be a source from which the fluid was originally drawn).

This may include instructing the spinning membrane separator drive unit 14 and/or the centrifugal separator 16 to operate at a particular rotational speed and instructing a pump P1-P6 to convey fluid through a portion of the fluid flow circuit 12 at a particular flow rate. Hence, while it may be described herein that a particular component of the fluid processing device 10 (e.g., the spinning membrane separator drive unit 14 or the centrifugal separator 16) performs a particular function, it should be understood that that component is being controlled by the controller 18 to perform that function.

Before, during, and after a procedure, the controller 18 may receive signals from various components of the fluid processing device 10 (e.g., the pressure sensors A1-A4) to monitor various aspects of the operation of the fluid processing device 10 and characteristics of the fluid and separated fluid components as they flow through the fluid flow circuit 12. If the operation of any of the components and/or one or more characteristics of the fluid or separated fluid components is outside of an acceptable range, then the controller 18 may initiate an alarm or error condition to alert the operator and/or take action to attempt to correct the condition. The appropriate corrective action will depend upon the particular error condition and may include action that is carried out with or without the involvement of an operator.

For example, the controller 18 may include an interface control module, which receives signals from the light detector 52 of the interface monitoring system. The signals that the controller 18 receives from the light detector 52 are indicative of the location of an interface between the separated fluid components within the centrifugal separation chamber 36. If the controller 18 determines that the interface is in the wrong location, then it can issue commands to the appropriate components of the fluid processing device 10 to modify their operation so as to move the interface to the proper location. For example, the controller 18 may instruct one of the pumps P1-P6 to cause fluid to flow into the centrifugal separation chamber 36 at a different rate and/or for a separated fluid component to be removed from the centrifugal separation chamber 36 at a different rate and/or for the centrifugal separation chamber 36 to be spun at a different speed by the centrifugal separator 16.

If provided, an operator interface station associated with the controller 18 allows the operator to view on a screen or display (in alpha-numeric format and/or as graphical images) information regarding the operation of the system. The operator interface station also allows the operator to select applications to be executed by the controller 18, as well as to change certain functions and performance criteria of the system. If configured as a touchscreen, the screen of the operator interface station can receive input from an operator via touch-activation. Otherwise, if the screen is not a touchscreen, then the operator interface station may receive input from an operator via a separate input device, such as a computer mouse or keyboard. It is also within the scope of the present disclosure for the operator interface station to receive input from both a touchscreen and a separate input device, such as a keypad.

### II. The Disposable Fluid Flow Circuit

As for the fluid flow circuit or flow set 12 (Fig. 2), it is intended to be a sterile, single use, disposable item. Before beginning a given fluid processing procedure, the operator loads various components of the fluid flow circuit 12 in the case 20 in association with the fluid processing device 10. The controller 18 implements the procedure based upon preset protocols, taking into account other input from the operator. Upon completing the procedure, the operator removes the fluid flow circuit 12 from association with the fluid processing device 10. The portions of the fluid flow circuit 12 holding the collected fluid component or components (e.g., collection containers or bags) are removed from the case 20 and retained for storage, transfusion, or further processing. The remainder of the fluid flow circuit 12 is removed from the case 20 and discarded.

In the illustrated embodiment, the fluid flow circuit 12 includes a cassette, to which the other components of the fluid flow circuit 12 are connected by flexible tubing. The other components may include a plurality of fluid containers F1-F7. In the context of the present disclosure these containers include an anticoagulant container F1, a saline container F2, an in-process container F3, a return container F4, a plasma collection container F5, a platelet collection container F6, and an (optional) additive container F7. The illustrated flow circuit 12 further includes one or more fluid source access devices (e.g., a connector for accessing blood within a fluid container or a phlebotomy needle), a spinning membrane separator 26 and a centrifugal separation chamber 36.

The flow control cassette provides a centralized, programmable, integrated platform for all the pumping and many of the valving functions required for a given fluid processing procedure. In one embodiment, the cassette is similarly configured to the cassette of U.S. Patent No. 5,868,696, but is adapted to include additional components (e.g., more tubing loops) and functionality.

In use, the cassette is mounted to the cassette station 54 of the fluid processing device 10 so as to align each sensor station with an associated pressure sensor A1-A4 of the cassette station 54 and its valve stations with an associated valve V1-V9. Each valve station may define one or more ports that allow fluid communication between the valve station and another interior cavity of the cassette (e.g., a flow path). As described above, each valve V1-V9 is movable under command of the controller 18 to move between a plurality of positions (e.g., between a retracted or lowered position and an actuated or raised position) to selectively contact the valve stations of the cassette. In the actuated position, a valve V1-V9 engages the associated valve station to close one or more of its ports to prevent fluid flow therethrough. In the retracted position, a valve V1-V9 is disengaged from the associated valve station (or less forcefully contacts the associated valve station than when in the actuated position) to open one or more ports associated with the valve station, thereby allowing fluid flow therethrough.

A plurality of tubing loops extend from the side surface of the cassette to interact with pumps P1-P6 of the fluid processing device 10. The different pumps P1-P6 may interact with the tubing loops of the cassette to perform different tasks during a procedure, but in the context of the present disclosure, a different one of the pumps P1-P6 may be configured to serve as an anticoagulant pump P1, a source pump P2, a centrifuge pump P3, an outlet pump P4, a recirculation pump P5, and a plasma pump P6. If the pumps P1-P6 are differently configured (e.g., if they are configured as pneumatic pumps), then the cassette may be differently configured (e.g., with pump stations aligned with pneumatic pump actuators) to allow for the pumps P1-P6 to convey fluid through the cassette.

Additional tubing extends from the side surface of the cassette to connect to the other components of the fluid flow circuit 12, such as the various fluid containers F1-F7, the spinning membrane separator 26, and the centrifugal separation chamber 36. The tubing connected to the centrifugal separator chamber 36 (which includes one inlet tube and two outlet tubes) may be aggregated into an umbilicus.

Various additional components may be incorporated into the tubing leading out of the cassette or into one of the cavities of the cassette. For example, a manual clamp 56 may be associated with a line or lines leading to the fluid source, a return line filter 58 (e.g., a microaggregate filter) may be associated with a line leading to a fluid recipient, and/or an air trap 62 may be positioned on a line upstream of the centrifugal separation chamber 36.

### III. Exemplary Fluid Processing Procedure

An exemplary fluid processing procedure according to the present disclosure will now be described.

Prior to processing, an operator selects the desired protocol (e.g., using an operator interface station, if provided), which informs the controller 18 of the manner in which it is to control the other components of the fluid processing device 10 during the procedure. This may include first selecting one of a plurality of possible procedures that the system is capable of executing and then, after selecting the nature of the procedure, selecting one or more parameters to be in effect during the procedure. For example, this may include selecting a platelet collection procedure from among a variety of blood separation procedures and then selecting a total volume of blood to be processed or a target volume of platelets to be collected during the procedure. If the fluid source is a living source (e.g., a donor or patient), the operator may proceed to enter various parameters, such as the sex/height/weight of the source. In one embodiment, the operator may also enter one or more characteristics of the fluid to be processed, such as a platelet pre-count.

Once the controller 18 has received the necessary input, it may proceed to instruct the operator to mount the fluid flow circuit 12 to the fluid processing device 10. If there are any fluid containers (e.g., a platelet additive solution container) that are not integrally formed with the fluid flow circuit 12, they may be connected to the fluid flow circuit 12 (e.g., by piercing a septum of a tube of the fluid flow circuit 12 or via a luer connector), with the fluid flow circuit 12 then being mounted to the fluid processing device 10 (including the fluid containers F1-F7 being associated with the volume measurement systems W1-W6, as appropriate). In one exemplary embodiment, each volume measurement system W1-W6 includes a weight scale associated with a hook from which a fluid container may be hung. In another exemplary embodiment, at least one of the volume measurement systems W1-W6 includes a weight scale associated with a horizontal platform or surface, with a container being placed onto the platform or surface for support while the weight scale sends signals indicative of the weight of the container (and its contents) to be sent to the controller 18 throughout the course of a procedure. In other embodiments, a fluid container may be associated with a volume measurement system omitting a weight scale, but including other means for measuring the volume of fluid within the container (e.g., one or more sensors).

Once the fluid flow circuit 12 has been fully mounted to the fluid processing device 10, the controller 18 may proceed with an integrity check of the fluid flow circuit 12 to ensure that the various components of the fluid flow circuit 12 are properly connected and functioning. Following a successful integrity check, the fluid source is connected to the fluid flow circuit 12 (e.g., by connecting to a container of previously collected fluid or by phlebotomizing a donor), and the fluid flow circuit 12 may be primed (e.g., using saline pumped from a saline container F2 by operation of one or more of the pumps P1-P6 of the fluid processing device 10).

After the fluid flow circuit 12 has been primed, fluid processing may begin. In a first phase of an exemplary platelet collection procedure, blood is drawn into the fluid flow circuit 12 from a blood source. If the blood source is a donor, then blood may be drawn into the fluid flow circuit 12 through a single needle that is connected to the cassette by line L1. Line L1 may include a manual clamp 56 that may initially be in a closed position to prevent fluid flow through line L1. When processing is to begin, an operator may move the manual clamp 56 from its closed position to an open position to allow fluid flow through line L1.

The blood is drawn into line L1 by the source pump P2 of the fluid processing device 10. Anticoagulant from the anticoagulant container F1 may be drawn through line L2 under action of the anticoagulant pump P1 and added to the blood at a junction of lines L1 and L2.

In the illustrated embodiment, valve V10 is open to allow anticoagulated blood to flow through line L3 and a cassette sensor station associated with pressure sensor A1, while valve V11 is closed to prevent fluid flow through line L4. If the blood source is a living body (e.g., a donor), the pressure sensor A1 may communicate with the controller 18 to monitor the pressure within the vein of the blood source.

The cassette includes two valve stations downstream of the source pump P2, with valve V2 being closed to prevent flow through line L5 and valve V1 being open to allow flow through line L6. A portion of the blood is directed through line L7 and a cassette sensor station associated with pressure sensor A3 to the in-process container F3 and the remainder is directed through line L8 toward the centrifuge pump P3, which controls the amount of blood that is directed to the centrifugal separation chamber 36 instead of the in-process container F3. In particular, the flow rate of the source pump P2 is greater than the flow rate of the centrifuge pump P3, with the difference therebetween being equal to the flow rate of blood into the in-process container F3. The flow rates may be selected such that the in-process container F3 is partially or entirely filled with blood at the end of the draw phase.

The blood pumped through line L8 by the centrifuge pump P3 passes through line L19, an air trap 62, and a cassette sensor station associated with pressure sensor A2 (which works in combination with the controller 18 of the fluid processing device 10 to monitor the pressure in the centrifugal separation chamber 36) before reaching the centrifugal separation chamber 36 of the fluid flow circuit 12. The centrifugal separator 16 of the fluid processing device 10 manipulates the centrifugal separation chamber 36 to separate the blood in the centrifugal separation chamber 36 into platelet-rich plasma and packed red blood cells. In one embodiment, the centrifugal separation chamber 36 is rotated nominally at 4,500 rpm, but the particular rotational speed may vary depending on the flow rates of fluids into and out of the centrifugal separation chamber 36.

The packed red blood cells exit the centrifugal separation chamber 36 via line L10 and flow through line L11 into the return container F4. Platelet-rich plasma is drawn out of the centrifugal separation chamber 36 via line L12 by the combined operation of the recirculation and outlet pumps P5 and P4 of the fluid processing device 10. The platelet-rich plasma travels through line L12 until it reaches a junction, which splits into lines L13 and L14. The recirculation pump P5 is associated with line L13 and redirects a portion of the platelet-rich plasma to a junction, where it mixes with blood in line L8 that is being conveyed into the centrifugal separation chamber 36 by the centrifuge pump P3. Recirculating a portion of the platelet-rich plasma into the centrifugal separation chamber 36 with inflowing blood decreases the hematocrit of the blood entering the centrifugal separation chamber 36, which may improve separation efficiency. By such an arrangement, the flow rate of the fluid entering the centrifugal separation chamber 36 is equal to the sum of the flow rates of the centrifuge pump P3 and the recirculation pump P5. As the platelet-rich plasma drawn out of the centrifugal separation chamber 36 into line L13 by the recirculation pump P5 is immediately added back into the centrifugal separation chamber 36, the bulk or net platelet-rich plasma flow rate out of the centrifugal separation chamber 36 is equal to the flow rate of the outlet pump P4.

Line L14 ends at a junction, where it joins with lines L15 and L16. Valve V6 is closed to prevent fluid flow through line L16, thereby directing the separated platelet-rich plasma to the spinning membrane separator 26 via line L15. Before reaching the spinning membrane separator 26, the portion of the platelet-rich plasma conveyed through line L15 passes the spinner inlet sensor M1 and a cassette sensor station associated with pressure sensor A4. The spinner inlet sensor M1 may detect the concentration of platelets in the platelet-rich plasma entering the spinning membrane separator 26, while the pressure sensor A4 may monitor the pressure of the spinning membrane separator 26.

While valve V6 is typically closed, it may be selectively opened to divert all or a portion of the platelet-rich plasma from line L14 into and through line L16 and to the return container F4, if necessary. An example would be at the start of a procedure when separation is initializing and platelets are not yet exiting the centrifugal separation chamber 36, in which case the fluid conveyed through line L14 by the outlet pump P4 could be diverted to the return container F4.

The spinning membrane separator drive unit 14 of the fluid processing device 10 manipulates the spinning membrane separator 26 to separate the platelet-rich plasma into platelet-poor plasma ("plasma") and platelet concentrate ("platelets"). Plasma is pumped out of the spinning membrane separator 26 via line L17 by the plasma pump P6 of the fluid processing device 10. Valves V5, V6, V8, and V9 are closed to direct the separated plasma along line L18, through valve V4, and into the return container F4 (with the separated red blood cells). On the way to the return container F4, the plasma passes through spinner outlet sensor M2, which may cooperate with the controller 18 to determine one or more characteristics of the plasma, such as the amount of cellular blood components in the plasma and/or whether the plasma is hemolytic and/or lipemic.

The platelet concentrate is conveyed out of the spinning membrane separator 26 via line L19. There is no pump associated with line L19, so instead the flow rate at which the platelets exit the spinning membrane separator 26 is equal to the difference between the flow rates of the outlet pump P4 and plasma pump P6. Valve V8 is closed to prevent fluid flow through the line L20, thereby directing the flow of platelets along line L19, through valve V7, and into the platelet collection container F6. Valve V8 may be selectively opened to allow fluid flow through line L20 and to a junction, where it joins the plasma flowing through line L18 to the return container F4, if necessary.

Depending on the volume of platelets to be collected, the above-described draw stage may be repeated, with draw stages being alternated with return stages in which blood from the in-process container F3 is separated in the centrifugal separation chamber 36 while previously collected blood components in the return container F4 are returned to the blood source. During such return stages, the separated red blood cells and platelet-rich plasma may be variously routed through the fluid flow circuit 12, typically with an additional volume of platelets being collected in the platelet collection container F6 after being separated from platelet-poor plasma in the spinning membrane separator 26 (as during the draw stage). A platelet additive solution from the additive container F7 may be added to the collected platelets in the platelet collection container F6 before ending the procedure.

### IV. Determination Of Cell Concentration

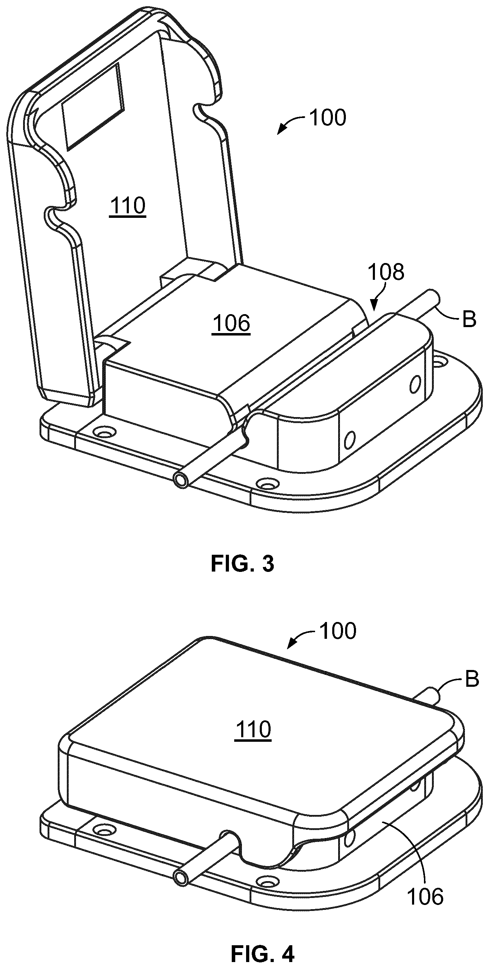

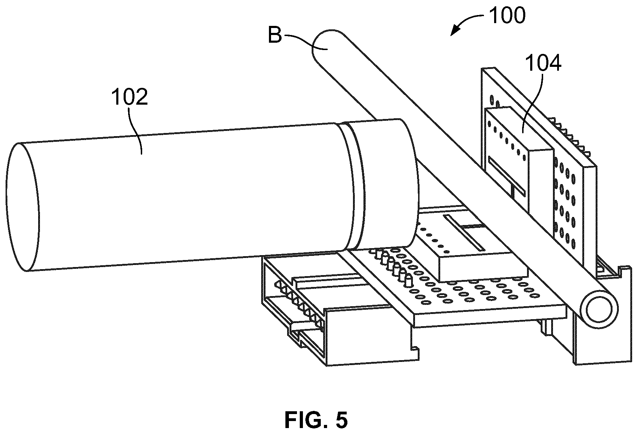

As noted above, the spinner inlet sensor M1 may be used in combination with the controller 18 to determine one or more properties of a fluid flowing into a spinning membrane separator 26, while the spinner outlet sensor M2 may be used to determine one or more properties of a fluid flowing out of the spinning membrane separator 26. Figs. 3-5 illustrate an exemplary optical detection assembly 100 that may be incorporated into the fluid processing device 10 to perform the functions of the spinner inlet sensor M1 or the spinner outlet sensor M2. In one embodiment, two such optical detection assemblies 100 may be incorporated into the fluid processing device 10, with one acting as the spinner inlet sensor M1 and the other acting as the spinner outlet sensor M2. While the optical detection assembly 100 of Figs. 3-5 will be described herein as being a component of the fluid processing device 10 of Fig. 1, it should be understood that optical detection assemblies according to the present disclosure may be incorporated into differently configured fluid processing devices or be provided as standalone devices that are not incorporated into a fluid processing device.

In the illustrated embodiment, the optical detection assembly 100 includes a light source 102 and a light detector array 104, which are spaced apart to accommodate a vessel "B" therebetween. When the optical detection assembly 100 is employed as a spinner inlet sensor M1, the vessel B may be line L15 of the fluid flow circuit 12, with the vessel B being line L17 of the fluid flow circuit 12 when the optical detection assembly 100 is instead employed as a spinner outlet sensor M2. It should be understood that the configuration of the vessel B used in combination with the optical detection assembly 100 may vary without departing from the scope of the present disclosure, provided that the vessel B is suitable for containing a fluid (which may include the vessel B being configured to accommodate the flow of a fluid therethrough) and formed of a material that is configured to transmit light emitted by the light source 102.

The illustrated optical detection assembly 100 includes a base 106 defining a slot or channel 108 configured to receive the vessel B. The channel 108 is configured to secure the vessel B in a desired orientation with respect to the light source 102 and the light detector array 104. The optical detection assembly 100 may also include a lid 110 (which is shown in Figs. 3 and 4 as being hingedly or pivotally associated to the base 106) to block external light from interfering with analysis of a fluid within the vessel B.

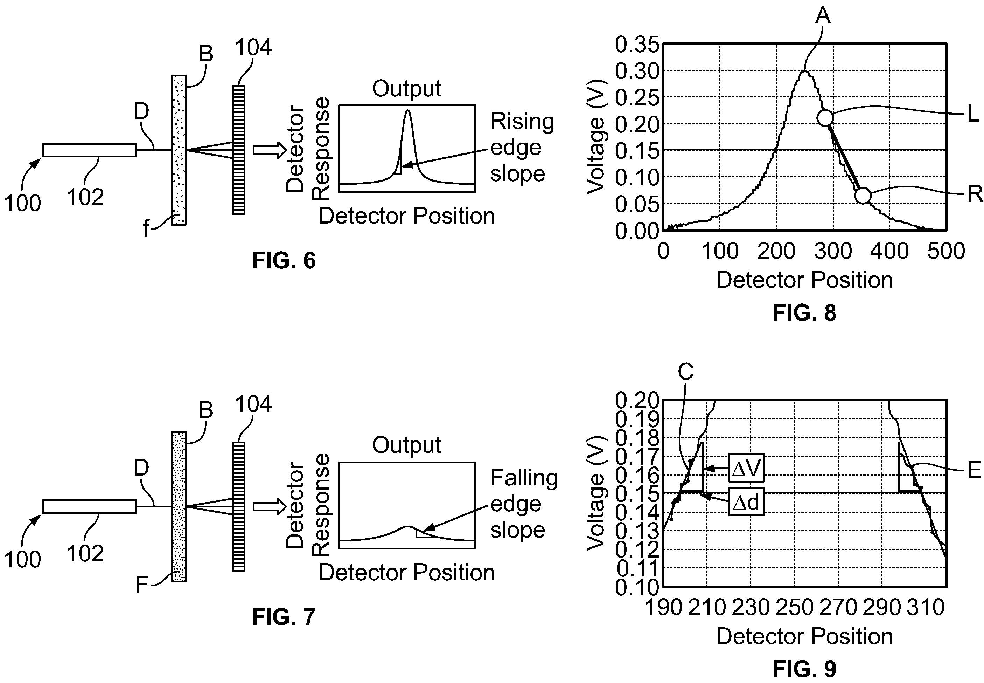

Light D emitted by the light source 102 (which may be variously configured without departing from the scope of the present disclosure) enters and then exits the vessel B after passing through a fluid within the vessel B. Figs. 6 and 7 illustrate transmitted light exiting the vessel B, with the light detector array 104 positioned and oriented to receive at least a portion of the transmitted light. The light detector array 104 is comprised of a plurality of light detectors or light-sensing elements (e.g., 256 photodiodes in a linear array). As explained above, light exiting a turbid media (such as blood or a blood component) will be dispersed, such that the light may be detected at multiple positions, rather than at a single location by a single light detector (e.g., an individual photodiode). It has been found that different fluids (e.g., ones having different concentrations of a target substance) may result in emerging light beams having different dispersion patterns. For example, Fig. 6 illustrates a fluid "f" having a relatively low concentration of platelets, while Fig. 7 illustrates a fluid "F" having a higher concentration of platelets. The light D (which may be a narrowly focused laser beam, for example) transmitted through the fluid in the vessel B is dispersed, with different individual light detectors receiving different portions of the transmitted light.

A controller associated with the light detector array 104 (which may be the controller 18 of the fluid processing device 10 or a different, dedicated controller) receives signals from each of the individual light detectors of the light detector array 104, with each signal being indicative of the intensity of light received by the individual light detector that transmitted the signal to the controller. Figs. 6 and 7 include charts generated by the controller based on the signals from the light detector array 104 (which are referred to herein as "scattering profiles") that reflect the intensity of the signal received by the controller from each individual light detector, with the results ordered by the relative positions of the individual light detectors (i.e., the signal from the light detector at the left end of the light detector array 104 is presented at the left end of each chart, with the signal from the adjacent light detector being presented just to the right of the signal from the first light detector and so on until the signal from the light detector at the right end of the light detector array 104 is presented at the right end of each chart). As can be seen in Figs. 6 and 7, the light detectors at the center of the light detector array 104 will tend to receive the most intense light, with the light detectors at each end of the light detector array 104 receiving little to no light.

In the illustrated embodiment, platelets within the fluid cause light to scatter, rather than being transmitted straight through the fluid and vessel B (along its initial path). As there are more cells in the fluid F of Fig. 7, there is more scattering of the light, with more individual light detectors receiving at least some of the light, though with a relatively low maximum intensity compared to the maximum intensity of the light received by an individual light detector in Fig. 6. Stated differently, light passing through the less concentrated fluid f of Fig. 6 is narrowly distributed or dispersed, while light passing through the more highly concentrated fluid F of Fig. 7 is more widely or broadly distributed or dispersed. Thus, by providing a light detector array 104, the intensity of light received by multiple individual light detectors (i.e., the light distribution or the scattering profile) may be assessed to determine one or more properties of a subject fluid, such as a concentration of a substance (e.g., platelets) in the fluid. This may allow for improved measurement accuracy compared to conventional optical detection assemblies having a single light detector and a controller configured only to assess the intensity of light received by the single light detector.

Once the controller has generated a scattering profile, it may employ various approaches to extract data from the scattering profile that can be used to determine a characteristic of a subject fluid. For example, a scattering profile will have an apex at the location corresponding to the individual light detector that has received the most light that has passed through the vessel B and the fluid within the vessel B. The scattering profile will have a "rising edge" to the left of the apex and a "falling edge" to the right of the apex. The rising edge encompasses signals from the individual light detectors to the left of the central light detectors, while the falling edge encompasses signals from the individual light detectors to the right of the central light detectors. As explained above, the light detectors closer to the center of the light detector array 104 will tend to receive more light than the light detectors spaced farther from the center, such that the rising edge will have a positive slope (which will tend to be different at different points along the scattering profile) and the falling edge will have a negative slope (which will tend to be different at different points along the scattering profile).

As the rising edge slope and the falling edge slope will tend to vary at different points along the scattering profile, the controller may employ different techniques to calculate the slope of a section of the rising edge or the falling edge. For example, Fig. 6 illustrates a section of the rising edge of a scattering profile that may be analyzed to calculate a rising edge slope, while Fig. 7 illustrates a section of the falling edge of a scattering profile that may be analyzed to calculate a falling edge slope. In one exemplary approach, the controller selects two points of the rising edge or two points of the falling edge of a scattering profile, corresponding to the signals from two individual light detectors of the light detector array 104. The controller then divides the change in detector response (the voltage of the signal transmitted by the leftmost of the two detectors subtracted from the voltage of the signal transmitted by the rightmost of the two detectors) by the change in detector position (the difference between the relative positions of the two detectors within the light detector array 104) to calculate the slope of the edge. In the example shown in Fig. 8, the falling edge of the scattering profile is analyzed by the controller to calculate its slope, with the signal "L" from the leftmost of the two selected detectors (which has a detector position of 290) having a voltage of 2.1 dV and the signal "R" from the rightmost of the two selected detectors (which has a detector position of 350) having a voltage of 0.7 dV. In this example, the falling edge slope is approximately -0.023 ((0.7 dV - 2.1 dV) / (350 - 290)).

According to another approach, the controller may employ a linear regression to calculate the rising edge slope or the falling edge slope, with Fig. 9 showing regression lines for calculating the slope of a section of a rising edge of a scattering profile (line "C") and the slope of a falling edge of a scattering profile (line "E").

Any two points of the rising edge of a scattering profile or of the falling edge of a scattering profile may be selected when calculating the slope of the selected edge. According to one exemplary approach, the two points correspond to the individual light detectors that have generated signals which are one of two selected percentages of the signal at the apex "A" of the scattering profile. In one example, the two selected percentages are 35% of the signal at the apex of the scattering profile and 65% of the signal at the apex of the scattering profile. When analyzing the rising edge of a scattering profile, the leftmost of the two selected light detectors will be the one having a signal that is 35% of the signal at the apex of the scattering profile, with the rightmost of the two selected light detectors being the one having a signal that is 65% of the signal at the apex. When analyzing the falling edge of a scattering profile (as in Fig. 8), the leftmost of the two selected light detectors will be the one having a signal that is 65% of the signal at the apex, with the rightmost of the two selected light detectors being the one having a signal that is 35% of the signal at the apex.

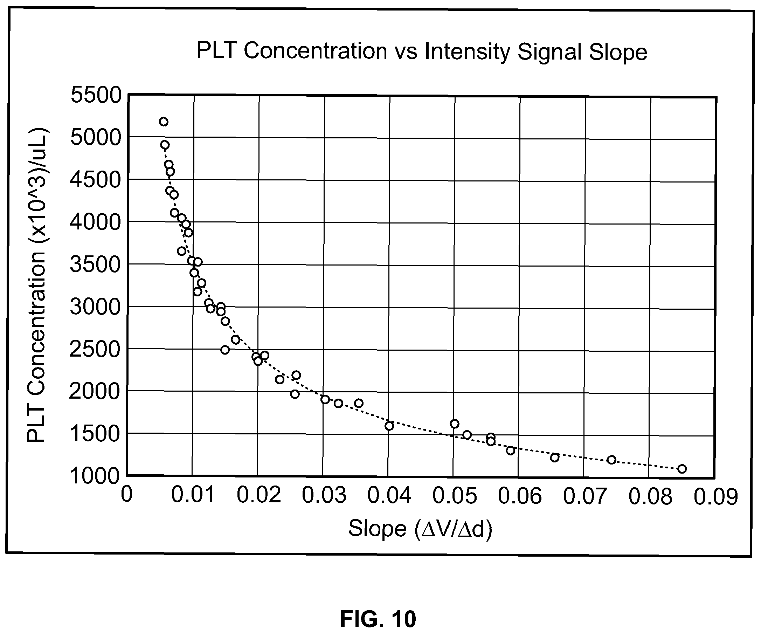

Regardless of the manner in which the rising edge slope or the falling edge slope is calculated, it has been found that the magnitude of the rising edge slope and the falling edge slope of a scattering profile are each indicative of the cellular concentration of a fluid being monitored by the optical detection assembly 100. A library or database of substance concentrations each correlated to a rising edge slope and/or a falling edge slope may be programmed into the controller or may be stored elsewhere and be remotely accessed by the controller. For example, Fig. 10 is a chart that illustrates an empirically derived correlation between rising edge slope or falling edge slope and the platelet concentration of a fluid. In the example shown in Fig. 8, the magnitude of the falling edge slope is approximately 0.023, which corresponds to a platelet concentration of approximately 2,250 x 10³ platelets / µL.

As a scattering profile will have both a rising edge and a falling edge, the slope of either may be calculated and compared to the library or database of correlations to determine the fluid characteristic that is correlated to the slope. A scattering profile will frequently be substantially symmetrical about its apex, such that the slope of a section of the rising edge will tend to be approximately equal to the slope of the corresponding section of the falling edge, in which case each slope will correlate to the same approximate fluid characteristic value. However, it is within the scope of the present disclosure for both slopes to be employed when determining a fluid characteristic value. According to one exemplary approach, the rising edge slope and the falling edge slope may both be calculated, with the controller then calculating the average of the two slopes and then comparing the average value to the library or database of correlations to determine the fluid characteristic value. According to another exemplary approach, the rising edge slope and the falling edge slope may both be calculated, with the controller comparing each slope to the library or database to determine the fluid characteristic value correlated to each slope. The controller may then calculate the average of those two fluid characteristic values, with the controller determining the fluid characteristic value of the subject fluid to be equal to the calculated average. Other approaches to employing the slopes of both the rising edge and the falling edge of a scattering profile to determine a fluid characteristic value (e.g., giving more weight to one of the slopes than the other) may also be employed without departing from the scope of the present disclosure.

As noted above, the controller may employ various approaches to extract data from a scattering profile to determine a characteristic of a subject fluid, such that it should be understood that the present disclosure is not limited to a correlation curve that correlates the slope of a portion of a scattering profile to cell concentration. For example, cell concentration may be correlated (in an empirically derived correlation curve) to the maximum intensity of light received by an individual light detector, to a summation of the intensity of light received by at least two individual light detectors, or to the width of the scattering profile (corresponding to the number of the individual light detectors that have received some minimum amount of light), as described in greater detail in U.S. Patent Application Publication No. 2023/0243746.

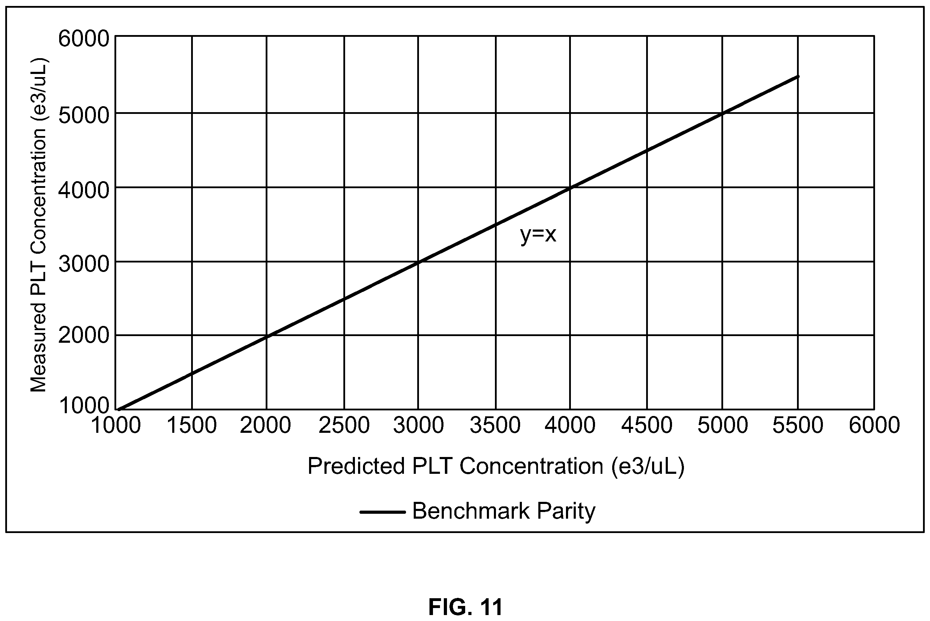

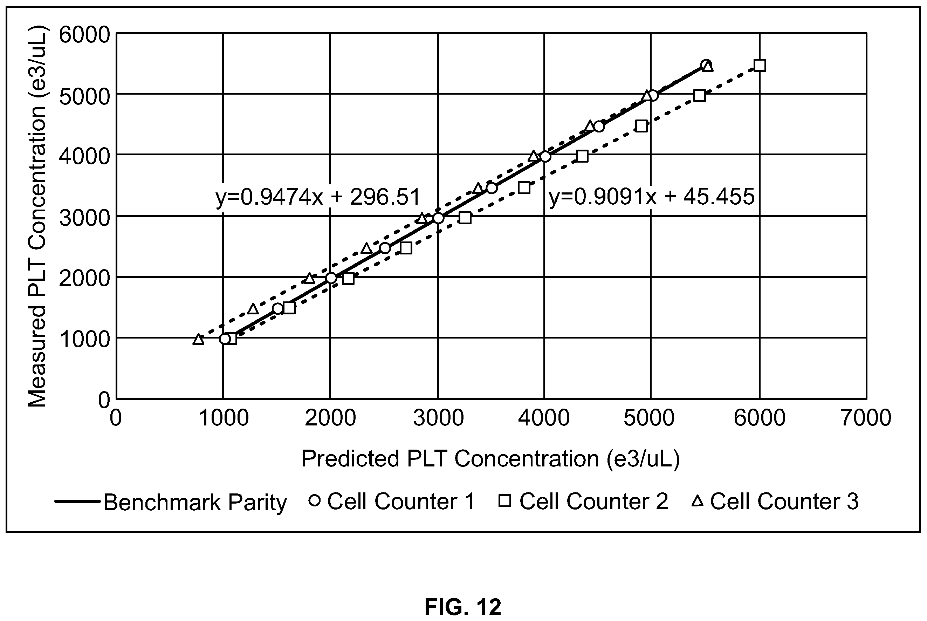

Regardless of the particular relationship between an aspect of a scattering profile and a predicted cell concentration that is encapsulated by a correlation curve, that relationship and the correlation curve are specific to the configuration of the cell counter employed to generate the correlation curve. Thus, when a cell counter employed by a facility (e.g., a blood center) has the same configuration as the cell counter that was used to generate a correlation curve, there will be a 1:1 relationship between the cell concentration predicted by a controller using the correlation curve and the cell concentration measured by the cell counter, as illustrated in Fig. 11 (with the x-axis representing a platelet concentration predicted by the controller and the y-axis representing a platelet concentration measured by the cell counter). On the other hand, when a facility employs a cell counter that is configured differently from the cell counter used to generate the correlation curve (e.g., a cell counter made by a different manufacturer or one that is a different model from the same manufacturer), there may not be a 1:1 relationship between the cell concentration predicted by a controller using the correlation curve and the cell concentration measured by the cell counter, as illustrated in Fig. 12 (which will be explained in greater detail).

Accordingly, prior to using the controller of a fluid processing device to predict the concentration of a cell or cells in a fluid, an operator may first work with the fluid processing device to determine whether an adjustment factor needs to be employed to correct any predictions generated by the controller in view of a difference between the configuration of the cell counter employed in the operator's facility and the configuration of the cell counter used to generate the correlation curve employed by the controller. This approach calls for the operator to use the optical detection assembly and controller of the fluid processing device (as described above) to predict the cell concentrations of a plurality of fluids having different cell concentrations and to use the facility's cell counter to measure the cell concentrations of those same fluids. The number of fluids analyzed by the optical detection assembly and cell counter may vary without departing from the scope of the present disclosure, though it may be advantageous to employ a sufficiently large number of samples having a relatively wide range of cell concentrations so as to create a more reliable adjustment factor.

For each fluid, the cell concentration predicted by the controller is plotted against the cell concentration measured by the cell counter to generate a correlation curve of the type illustrated in Fig. 12, which shows the correlation curves for three differently configured cell counters (identified in Fig. 12 as "Cell Counter 1," "Cell Counter 2," and "Cell Counter 3"). In addition to the three correlation curves for the three differently configured cell counters, Fig. 12 also includes a "Benchmark Parity" curve representing the 1:1 relationship between the cell concentration predicted by the controller and the cell concentration measured by a cell counter having the same configuration as the one used to generate the correlation curve employed by the controller (with the "Benchmark Parity" curve of Fig. 12 being the same correlation curve that is illustrated in Fig. 11). The predictions and measurements may be plotted against each other by the controller or using any other suitable computer or computing device.

Once a curve correlating the cell concentrations predicted by the controller to the corresponding cell concentrations measured by a cell counter has been created, an equation representing the curve (which may be referred to herein as an "adjustment equation") may be created, either by the controller or by any other suitable computer or computing device. The nature of the adjustment equation (e.g., linear or quadratic or cubic) may vary without departing from the scope of the present disclosure, with the form of the adjustment equation depending on the data points generated by the controller and the cell counter. In one embodiment, the data points generated by the controller and the cell counter may be used to generate a linear equation representing a line of best fit (e.g., by employing a linear regression or a least-squares method), with the adjustment equation having one variable representing the slope of the line and one variable representing the point at which the line intercepts the y-axis. Fig. 12 illustrates such an approach, with the curve for Cell Counter 2 having a linear equation with a slope of 0.9091 and a y-axis intercept of 45.455 (y = 0.9091x + 45.455) and the curve for Cell Counter 3 having a linear equation with a slope of 0.9474 and a y-axis intercept of 296.51 (y = 0.9474x + 296.51). As for Cell Counter 1, its line of best fit coincides with the Benchmark Parity curve (indicating that Cell Counter 1 has the same configuration as the cell counter used to generate the correlation curve employed by the controller or that the two cell counters at least operate to provide identical results), resulting in a linear equation having a slope of 1 and a y-axis intercept of 0 (y = x).

Regardless of the nature of the adjustment equation generated for a particular cell counter, the adjustment equation is used by the controller to correct its predicted cell concentrations. This may include the controller itself retrieving or calculating the adjustment equation (or at least the constant values of the adjustment equation) or the operator providing the adjustment equation (or at least the constant values of the adjustment equation) to the controller. Once the controller is in possession of the adjustment equation, it may proceed to carry out a fluid processing procedure as usual, including controlling the optical detection assembly to predict the cell concentration of a fluid using the pre-programmed correlation curve. However, once the cell concentration has been predicted using the correlation curve, the controller then applies the adjustment equation (or at least the constant values of the adjustment equation) to generate an adjusted prediction, which corrects for any difference between the configurations of the facility's cell counter and the cell counter used to generate the correlation curve.

The manner in which the controller applies the adjustment equation (or at least the constant values of the adjustment equation) may vary without departing from the scope of the present disclosure. For example, when an adjustment equation is provided in the form of a linear equation, the (unadjusted) cell concentration predicted by the controller may be plugged into the adjustment equation as the "x" value, with the resulting "y" value being the adjusted or corrected cell concentration value for the subject fluid. In the case of Cell Counter 1, its adjustment equation is y = x, which means that Cell Counter 1 has the same configuration as the cell counter used to generate the pre-programmed correlation curve (or that the two cell counters at least operate to provide identical results) and that the cell concentration value ultimately reported by the controller is the same as the unadjusted cell concentration value. In view of this result, according to one embodiment, the controller may initially ask the operator whether the cell counter employed by the operator's facility is the same model as the one that was used to generate the pre-programmed correlation curve (prior to the operator engaging in the above exercise to generate an adjustment equation). If the operator confirms that the facility uses the same model of cell counter, then the controller may give the operator the option of foregoing the above exercise, based on the presumption that the resulting adjustment equation would be y = x (i.e., that no adjustment of the prediction made by the controller would be required). However, even when the facility uses the same model of cell counter, it may be prudent to proceed with the above exercise to confirm that no adjustments to the cell concentration predicted by the controller are required.

As for Cell Counter 2 and Cell Counter 3, each has an adjustment equation that results in an adjustment to at least some of the cell concentrations predicted by the controller using the correlation curve. By way of example, in the case of an unadjusted cell concentration value of 2,150 e³/µL, the controller will apply the adjustment equation for Cell Counter 2 (y = 0.9091x + 45.455) to arrive at an adjusted cell concentration value of 2,000 e³/µL, while applying the adjustment equation for Cell Counter 3 (y = 0.9474x + 296.51) to arrive at an adjusted cell concentration value of 2,333 e³/µL. After calculating the adjusted cell concentration value, the controller will then report or record the adjusted cell concentration value, rather than reporting or recording the unadjusted cell concentration value.

It will be seen that an approach of the type described herein is more practicable than an alternative approach in which the manufacturer of a fluid processing device determines an adjustment equation for every available cell counter and then programs all of the adjustment equations into the controller of the device, with an end user or operator informing the controller of the model of the cell counter being used at the user or operator's facility and the controller then selecting the appropriate adjustment equation to apply to its predictions. However, as noted above, it is within the scope of the present disclosure for the controller to query the operator as to whether the operator's facility uses the same model of cell counter as was used to derive the pre-programmed correlation curve, with the controller giving the operator the option of proceeding with a fluid processing procedure (including the controller predicting the cell concentration of a fluid using the correlation curve) without first taking the steps required to generate an adjustment equation.

### V. Aspects

Aspect 1. An optical detection assembly for monitoring a fluid in a vessel, comprising: a light source configured and oriented to emit a light into a fluid in a vessel; a light detector configured to receive at least a portion of the light exiting the vessel and to generate signals indicative of an intensity of said at least a portion of the light; and a controller configured to receive the signals from the light detector and programmed with a correlation curve derived using a first cell counter and relating the signals from the light detector to a concentration of cells in the fluid in the vessel, wherein the controller is further programmed to receive or calculate an adjustment equation reflecting a comparison between a configuration of the first cell counter and a configuration of a second cell counter used in combination with the optical detection assembly, receive said signals from the light detector, determine an unadjusted concentration of cells in the fluid in the vessel based at least in part on said signals and said correlation curve, and apply the adjustment equation to the unadjusted concentration of cells in the fluid in the vessel to determine an adjusted concentration of cells in the fluid in the vessel.

Aspect 2. The optical detection assembly of Aspect 1, wherein the controller is programmed to determine the unadjusted concentration of cells in the fluid in the vessel based at least in part on a signal from the light detector reflecting a maximum intensity of light received by the light detector.

Aspect 3. The optical detection assembly of Aspect 1, wherein the light detector is configured as a light detector array comprising a plurality of light-sensing elements, and the controller is programmed to receive signals from the light detector array indicative of an intensity of said at least a portion of the light received by each one of said plurality of light-sensing elements, generate a scattering profile based at least in part on said signals from the light detector array, and determine the unadjusted concentration of cells in the fluid in the vessel based at least in part on said scattering profile and said correlation curve.

Aspect 4. The optical detection assembly of Aspect 3, wherein the scattering profile includes a rising edge and a falling edge, and the controller is programmed to calculate a slope of the rising edge or the falling edge of the scattering profile, and determine the unadjusted concentration of cells in the fluid in the vessel based at least in part on said slope and said correlation curve.

Aspect 5. The optical detection assembly of Aspect 3, wherein the controller is programmed to determine the unadjusted concentration of cells in the fluid in the vessel based at least in part on a summation of the intensity of said at least a portion of the light received by at least two of said plurality of light-sensing elements.

Aspect 6. The optical detection assembly of Aspect 3, wherein the controller is programmed to determine the unadjusted concentration of cells in the fluid in the vessel based at least in part on a width of the scattering profile.

Aspect 7. The optical detection assembly of any one of the preceding Aspects, wherein the controller is programmed to receive input from an operator reflecting whether the second cell counter has the same configuration as the first cell counter, and proceed with applying the adjustment equation to the unadjusted concentration of cells in the fluid in the vessel to determine the adjusted concentration of cells in the fluid in the vessel only upon receiving input indicating that the second cell counter has a different configuration from the first cell counter.

Aspect 8. The optical detection assembly of any one of the preceding Aspects, wherein the controller is programmed to calculate the adjustment equation.

Aspect 9. The optical detection assembly of Aspect 8, wherein the controller is programmed to calculate the adjustment equation by determining the unadjusted concentration of cells in each of a plurality of fluids having different concentrations of cells, for each one of the plurality of fluids, plotting the unadjusted concentration of cells in the fluid against a measured cell concentration of the fluid from the second cell counter as a data point so as to create a curve having a plurality of said data points, and determining the adjustment equation to be an equation representing the curve.

Aspect 10. The optical detection assembly of any one of Aspects 1-7, wherein the controller is programmed to receive the adjustment equation from an operator.

Aspect 11. A fluid processing device comprising: a pump system; a valve system; an optical detection assembly including a light source configured and oriented to emit a light into a fluid in a vessel, and a light detector configured to receive at least a portion of the light exiting the vessel and to generate signals indicative of an intensity of said at least a portion of the light; and a controller configured to receive the signals from the light detector, programmed with a correlation curve derived using a first cell counter and relating the signals from the light detector to a concentration of cells in the fluid in the vessel, and programmed to control the operation of the pump system and the valve system to execute a fluid processing procedure, wherein the controller is further programmed to receive or calculate an adjustment equation reflecting a comparison between a configuration of the first cell counter and a configuration of a second cell counter used in combination with the fluid processing device, receive said signals from the light detector, determine an unadjusted concentration of cells in the fluid in the vessel based at least in part on said signals and said correlation curve, and apply the adjustment equation to the unadjusted concentration of cells in the fluid in the vessel to determine an adjusted concentration of cells in the fluid in the vessel.

Aspect 12. The fluid processing device of Aspect 11, wherein the controller is programmed to determine the unadjusted concentration of cells in the fluid in the vessel based at least in part on a signal from the light detector reflecting a maximum intensity of light received by the light detector.

Aspect 13. The fluid processing device of Aspect 11, wherein the light detector is configured as a light detector array comprising a plurality of light-sensing elements, and the controller is programmed to receive signals from the light detector array indicative of an intensity of said at least a portion of the light received by each one of said plurality of light-sensing elements, generate a scattering profile based at least in part on said signals from the light detector array, and determine the unadjusted concentration of cells in the fluid in the vessel based at least in part on said scattering profile and said correlation curve.

Aspect 14. The fluid processing device of Aspect 13, wherein the scattering profile includes a rising edge and a falling edge, and the controller is programmed to calculate a slope of the rising edge or the falling edge of the scattering profile, and determine the unadjusted concentration of cells in the fluid in the vessel based at least in part on said slope and said correlation curve.

Aspect 15. The fluid processing device of Aspect 13, wherein the controller is programmed to determine the unadjusted concentration of cells in the fluid in the vessel based at least in part on a summation of the intensity of said at least a portion of the light received by at least two of said plurality of light-sensing elements.

Aspect 16. The fluid processing device of Aspect 13, wherein the controller is programmed to determine the unadjusted concentration of cells in the fluid in the vessel based at least in part on a width of the scattering profile.

Aspect 17. The fluid processing device of any one of Aspects 11-16, wherein the controller is programmed to receive input from an operator reflecting whether the second cell counter has the same configuration as the first cell counter, and proceed with applying the adjustment equation to the unadjusted concentration of cells in the fluid in the vessel to determine the adjusted concentration of cells in the fluid in the vessel only upon receiving input indicating that the second cell counter has a different configuration from the first cell counter.

Aspect 18. The fluid processing device of any one of Aspects 11-17, wherein the controller is programmed to calculate the adjustment equation.

Aspect 19. The fluid processing device of Aspect 18, wherein the controller is programmed to calculate the adjustment equation by determining the unadjusted concentration of cells in each of a plurality of fluids having different concentrations of cells, for each one of the plurality of fluids, plotting the unadjusted concentration of cells in the fluid against a measured cell concentration of the fluid from the second cell counter as a data point so as to create a curve having a plurality of said data points, and determining the adjustment equation to be an equation representing the curve.

Aspect 20. The fluid processing device of any one of Aspects 11-17, wherein the controller is programmed to receive the adjustment equation from an operator.

Aspect 21. A method of determining a concentration of cells in a subject fluid in a vessel, comprising: providing a plurality of fluids having different concentrations of cells; for each one of the plurality of fluids, emitting a light through the fluid, receiving at least a portion of the light exiting the fluid vessel, determining an unadjusted concentration of cells in the fluid based at least on part on an intensity of said at least a portion of the light exiting the fluid and a correlation curve derived using a first cell counter, obtaining a measured cell concentration of the fluid from a second cell counter, plotting the unadjusted concentration of cells in the fluid against the measured cell concentration of the fluid as a data point so as to create a curve having a plurality of said data points, and determining an adjustment equation to be an equation representing the curve; emitting light through the subject fluid in the vessel; receiving at least a portion of the light exiting the subject fluid and the vessel; determining an unadjusted concentration of cells in the subject fluid in the vessel based at least in part on said correlation curve and an intensity of said at least a portion of the light exiting the subject fluid and the vessel; and applying the adjustment equation to the unadjusted concentration of cells in the subject fluid in the vessel to determine an adjusted concentration of cells in the subject fluid in the vessel.

Aspect 22. The method of Aspect 21, wherein the determination of the unadjusted concentration of cells in the subject fluid in the vessel is based at least in part on a maximum intensity of said at least a portion of the light exiting the subject fluid and the vessel.

Aspect 23. The method of Aspect 21, wherein said at least a portion of the light exiting the subject fluid and the vessel is received by a light detector array comprising a plurality of light-sensing elements, and the determination of the unadjusted concentration of cells in the subject fluid in the vessel is based at least in part on a scattering profile of said at least a portion of the light received by the light detector array.

Aspect 24. The method of Aspect 23, wherein the scattering profile includes a rising edge and a falling edge, and the determination of the unadjusted concentration of cells in the subject fluid in the vessel is based at least in part on a slope of the rising edge or the falling edge.

Aspect 25. The method of Aspect 23, wherein the determination of the unadjusted concentration of cells in the subject fluid in the vessel is based at least in part on a summation of the intensity of said at least a portion of the light received by at least two of said plurality of light-sensing elements.

Aspect 26. The method of Aspect 23, wherein the determination of the unadjusted concentration of cells in the subject fluid in the vessel is based at least in part on a width of the scattering profile.

Aspect 27. The method of any one of Aspects 21-26, further comprising determining whether the second cell counter has the same configuration as the first cell counter, wherein the adjustment equation is only applied to the unadjusted concentration of cells in the subject fluid in the vessel to determine the adjusted concentration of cells in the subject fluid in the vessel upon determining that the second cell counter has a different configuration from the first cell counter.

Aspect 28. The method of any one of Aspects 21-27, wherein the adjustment equation is calculated by a controller of a fluid processing device.

Aspect 29. The method of Aspect 28, wherein the unadjusted concentration of cells in each fluid and in the subject fluid in the vessel is determined by the controller of the fluid processing device, and the adjustment equation is applied to the unadjusted concentration of cells in the subject fluid in the vessel by the controller of the fluid processing device to determine the adjusted concentration of cells in the subject fluid in the vessel.

Aspect 30. The method of any one of Aspects 21-27, wherein the adjustment equation is provided to a controller of a fluid processing device, the unadjusted concentration of cells in each fluid and in the subject fluid in the vessel is determined by the controller of the fluid processing device, and the adjustment equation is applied to the unadjusted concentration of cells in the subject fluid in the vessel by the controller of the fluid processing device to determine the adjusted concentration of cells in the subject fluid in the vessel.

It will be understood that the embodiments described above are illustrative of some of the applications of the principles of the present subject matter. Numerous modifications may be made by those skilled in the art without departing from the spirit and scope of the claimed subject matter, including those combinations of features that are individually disclosed or claimed herein. For these reasons, the scope hereof is not limited to the above description but is as set forth in the following claims, and it is understood that claims may be directed to the features hereof, including as combinations of features that are individually disclosed or claimed herein.

## Claims

1. An optical detection assembly (100) for monitoring a fluid in a vessel, comprising:
a light source (102) configured and oriented to emit a light into a fluid in a vessel;
a light detector (104) configured to receive at least a portion of the light exiting the vessel and to generate signals indicative of an intensity of said at least a portion of the light; and
a controller (18) configured to receive the signals from the light detector (104) and programmed with a correlation curve derived using a first cell counter and relating the signals from the light detector (104) to a concentration of cells in the fluid in the vessel, wherein the controller (18) is further programmed to
receive or calculate an adjustment equation reflecting a comparison between a configuration of the first cell counter and a configuration of a second cell counter used in combination with the optical detection assembly (100),
receive said signals from the light detector (104),
determine an unadjusted concentration of cells in the fluid in the vessel based at least in part on said signals and said correlation curve, and
apply the adjustment equation to the unadjusted concentration of cells in the fluid in the vessel to determine an adjusted concentration of cells in the fluid in the vessel.

2. The optical detection assembly (100) of claim 1, wherein the controller (18) is programmed to determine the unadjusted concentration of cells in the fluid in the vessel based at least in part on a signal from the light detector reflecting a maximum intensity of light received by the light detector (104).

3. The optical detection assembly (100) of claim 1, wherein
the light detector (104) is configured as a light detector array comprising a plurality of light-sensing elements, and
the controller (18) is programmed to
receive signals from the light detector array indicative of an intensity of said at least a portion of the light received by each one of said plurality of light-sensing elements,
generate a scattering profile based at least in part on said signals from the light detector array, and
determine the unadjusted concentration of cells in the fluid in the vessel based at least in part on said scattering profile and said correlation curve.

4. The optical detection assembly (100) of claim 3, wherein
the scattering profile includes a rising edge and a falling edge, and
the controller (18) is programmed to
calculate a slope of the rising edge or the falling edge of the scattering profile, and
determine the unadjusted concentration of cells in the fluid in the vessel based at least in part on said slope and said correlation curve.

5. The optical detection assembly (100) of claim 3, wherein the controller (18) is programmed to determine the unadjusted concentration of cells in the fluid in the vessel based at least in part on a summation of the intensity of said at least a portion of the light received by at least two of said plurality of light-sensing elements.

6. The optical detection assembly (100) of claim 3, wherein the controller (18) is programmed to determine the unadjusted concentration of cells in the fluid in the vessel based at least in part on a width of the scattering profile.

7. The optical detection assembly (100) of any one of the preceding claims, wherein the controller (18) is programmed to
receive input from an operator reflecting whether the second cell counter has the same configuration as the first cell counter, and
proceed with applying the adjustment equation to the unadjusted concentration of cells in the fluid in the vessel to determine the adjusted concentration of cells in the fluid in the vessel only upon receiving input indicating that the second cell counter has a different configuration from the first cell counter.

8. The optical detection assembly (100) of any one of the preceding claims, wherein the controller (18) is programmed to calculate the adjustment equation.

9. The optical detection assembly (100) of claim 8, wherein the controller (18) is programmed to calculate the adjustment equation by
determining the unadjusted concentration of cells in each of a plurality of fluids having different concentrations of cells,
for each one of the plurality of fluids, plotting the unadjusted concentration of cells in the fluid against a measured cell concentration of the fluid from the second cell counter as a data point so as to create a curve having a plurality of said data points, and
determining the adjustment equation to be an equation representing the curve.

10. The optical detection assembly (100) of any one of claims 1-7, wherein the controller (18) is programmed to receive the adjustment equation from an operator.

11. A fluid processing device (10) comprising:
a pump system (P1-P6);
a valve system (V1-V11); and
the optical detection assembly (100) of any one of the preceding claims,
wherein the controller (18) is a component of the fluid processing device (10) and is programmed to control the operation of the pump system (P1-P6) and the valve system (V1-V11) to execute a fluid processing procedure.

12. A method of determining a concentration of cells in a subject fluid in a vessel, comprising:
providing a plurality of fluids having different concentrations of cells;
for each one of the plurality of fluids, emitting a light through the fluid, receiving at least a portion of the light exiting the fluid vessel, determining an unadjusted concentration of cells in the fluid based at least on part on an intensity of said at least a portion of the light exiting the fluid and a correlation curve derived using a first cell counter, obtaining a measured cell concentration of the fluid from a second cell counter, plotting the unadjusted concentration of cells in the fluid against the measured cell concentration of the fluid as a data point so as to create a curve having a plurality of said data points, and determining an adjustment equation to be an equation representing the curve;
emitting light through the subject fluid in the vessel;
receiving at least a portion of the light exiting the subject fluid and the vessel;
determining an unadjusted concentration of cells in the subject fluid in the vessel based at least in part on said correlation curve and an intensity of said at least a portion of the light exiting the subject fluid and the vessel; and
applying the adjustment equation to the unadjusted concentration of cells in the subject fluid in the vessel to determine an adjusted concentration of cells in the subject fluid in the vessel.

13. The method of claim 12, wherein the determination of the unadjusted concentration of cells in the subject fluid in the vessel is based at least in part on a maximum intensity of said at least a portion of the light exiting the subject fluid and the vessel.

14. The method of claim 12, wherein
said at least a portion of the light exiting the subject fluid and the vessel is received by a light detector array (104) comprising a plurality of light-sensing elements,
the determination of the unadjusted concentration of cells in the subject fluid in the vessel is based at least in part on a scattering profile of said at least a portion of the light received by the light detector array (104),
the scattering profile includes a rising edge and a falling edge, and
the determination of the unadjusted concentration of cells in the subject fluid in the vessel is preferably based at least in part on a slope of the rising edge or the falling edge, a summation of the intensity of said at least a portion of the light received by at least two of said plurality of light-sensing elements, and/or a width of the scattering profile.

15. The method of any one of claims 12-14, further comprising determining whether the second cell counter has the same configuration as the first cell counter, wherein the adjustment equation is only applied to the unadjusted concentration of cells in the subject fluid in the vessel to determine the adjusted concentration of cells in the subject fluid in the vessel upon determining that the second cell counter has a different configuration from the first cell counter.
